# NEUE EUROPÄISCHE PATENTSCHRIFT

(11) **EP 1 081 067 B2**
(45) Veröffentlichungstag und Bekanntmachung des Hinweises auf die Entscheidung über den Einspruch: **27.07.2016**
(45) Hinweis auf die Patenterteilung: 06.11.2002
(21) Anmeldenummer: 00119087.5
(22) Anmeldetag: 02.09.2000
(51) Int. Cl.: B65G 21/20

(54) **Bandfördereinrichtung für den insbesondere hängenden Transport von Transportgütern mittels Unterdruck**
Belt conveyor in particular for hanging transport of goods using vacuum means
Convoyeur à courroie en particulier pour le transport suspendu par dépression de marchandises

(30) Priorität: 06.09.1999 DE 19942498
(43) Veröffentlichungstag der Anmeldung: 07.03.2001
(73) Patentinhaber: NSM Magnettechnik GmbH, 59399 Olfen (DE)
(72) Erfinder: Ulrich, Hans, 59379 Selm (DE)
(74) Vertreter: Hennicke, Ernst Rüdiger

(56) Entgegenhaltungen:
- EP-A1- 0 864 515
- WO-A1-97/38927
- DE-A- 19 636 086
- DE-A- 19 653 381
- DE-A- 19 727 361
- DE-A1- 4 433 912
- GB-A- 966 641
- US-A- 3 199 654
- US-A- 3 802 699
- US-A- 4 411 420
- US-A- 4 804 081

## Beschreibung

Die Erfindung betrifft eine Bandfördereinrichtung für den hängenden Transport von Transportgütern mittels Unterdruck, insbesondere von platinenartigen Werkstücken, Blechen od.dgl., mit mindestens einem entlang einer Haltebahn bewegbaren Transportriemen und mit einer die Transportgüter gegen eine Transportseite des mindestens einen Transportriemens ansaugenden Unterdruckeinrichtung, die eine Vielzahl von in Transportrichtung des Transportriemens hintereinander angeordneten Ansaugdüsen aufweist, wobei jeder Ansaugdüse ein eigener Unterdruckerzeuger zugeordnet ist, und mit dem oder den Transportriemen zugeordneten, an der Haltebahn wirkenden Magneteinheiten.

Unterdruck-Bandförderer der gattungsgemäßen Art werden häufig in der biechverarbeitenden industrie in Bereichen eingesetzt, wo Bleche oder Werkstükke aus Blech wie beispielsweise Dosendeckel, Platinen in der Automobilindustrie od.dgl. hängend von einer Verarbeitungsstation zu einer weiteren Bearbeitungsstelle transportiert werden müssen. Die UnterdruckBandförderer werden dabei insbesondere zum Transport von nichtferromagnetischen Werkstoffen eingesetzt, beispielsweise für Aluminiumbleche, Kunststofftafeln oder Holzwerkstoffe. Dabei werden die zu transportierenden Transportgüter von der Unterdruckeinrichtung gegen den oder die Transportriemen angesaugt und dadurch an der Fördereinrichtung gehalten, während sie mit Hilfe der umlaufenden Transportriemen gefördert werden.

Bei einer bekannten Unterdruck-Bandfördereinrichtungen der gattungsgemäßen Art werden spezielle Unterdruck-Transportriemen verwendet, die im Abstand voneinander angeordnete Löcher aufweisen, durch die die Luft hindurch in einen an der Fördererunterseite angeordneten Unterdruckkanal eingesaugt wird. An dem Riemen selbst sind um die Löcher herum üblicherweise speziell ausgeformte Saugtaschen ausgebildet, in denen sich bei angelegtem Werkstück der Unterdruck ausbildet, derdas Blech od.dgl. am Förderer festhält (DE 196 36 161 A1, DE 299 05 390).

Bei dieser bekannten Unterdruck-Bandfördereinrichtung wird also Luft durch die Fördergurte hindurchgesaugt und der zum Halten der zu transportierenden Bauteile erforderliche Unterdruck unmittelbar an der Transportseite der Transportriemen selber zur Verfügung gestellt. Die Fördergurte sind hierzu speziell ausgebildet und beispielsweise mit die Ansaugöffnungen umgebenden, von der Transportseite vorragenden, elastischen Einzelsaugern oder mit zur Transportseite hin offenen Unterdrucktaschen versehen, um die Bleche an dem Riemen halten zu können. Aufgrund ihrer besonderen konstruktiven Ausgestaltung sind die Transportriemen für Unterdruck-Bandfördereinrichtungen sehr teuer. Darüber hinaus unterliegen sie auch einem hohen Verschleiß, denn es kommt häufig zu Beschädigungen oder vollständigem Abriß der von einem Riemen vorspringenden Einzelsauger, die dann mühevoll repariert oder ersetzt werden müssen. In den Riemen selbst eingelassene Unterdrucktaschen sind zwar weniger verschleißanfällig als vorragende Einzelsauger; bei diesen Unterdruck-Transportriemen ist aber häufig die Abdichtung zwischen dem zu transportierenden Bauteil und dem Riemen nicht zufriedenstellend, so daß ungewöhnlich leistungsstarke Unterdruckeinrichtungen eingesetzt werden müssen, um die zu transportierenden Bauteile sicher am Förderer zu halten.

Aus der DE 197 27 361 A1 ist eine Fördervorrichtung bekannt, bei der seitlich neben einem Transportriemen langgestreckte, schmale Rinnen ausgebildet sind, in denen über Ansaugöffnungen ein Unterdruck erzeugt wird, der das auf dem Förderriemen aufliegende Fördergut gegen die Oberseite des Transportriemens ansaugt. Die US 4 804 081 zeigt eine Fördervorrichtung mit zwei parallelen, endlosen und synchron angetriebenen Riemen, die beiderseits eines Unterdruckkanals angeordnet ist, der zumindest eine mit einer Unterdruckquelle verbundene Saugöffnung hat. Bei dieser bekannten Vorrichtung, die insbesondere für das Fördern von Stückgut in geneigter oder im wesentlichen vertikaler Stellung bestimmt ist, werden die Transportriemen von einen Vielzahl von seitlich neben dem Unterdruckkanal angeordneten Rollen geführt.

Aufgabe der Erfindung ist es, eine Bandfördereinrichtung der eingangs genannten Art zu schaffen, mit der sowohl ferromagnetische Werkstücke mit Hilfe der Magneteinheiten wie auch nicht-magnetische Werkstücke mittels Unterdruck hängend transportiert werden können, wobei in beiden Fällen der Energie- bzw. Arbeitsmittelverbrauch gering ist und wobei die Transportriemen einem sehr geringen Verschleiß unterliegen und es möglich ist, die transportierten Güter an mehreren verschiedenen stellen von der Fördereinrichtung abzuwerfen.

Diese Aufgabe wird mit der Erfindung dadurch gelöst, daß die Ansaugdüsen seitlich neben dem mindestens einen Transportriemen an der Haltebahn so angeordnet sind, daß sich ihr in Richtung auf die transportierten Transportgüter weisender Düsenrand in geringem Abstand zu diesen bzw. der Transportseite des Transportriemens befindet und daß die Unterdruckerzeuger für zumindest einen Teil der Ansaugdüsen einzeln und gruppenweise bzw. gruppenweise schaltbar sind, und daß zumindest ein Teil der Magneteinheiten gruppenweise schaltbar ist, und daß der oder die Transportriemen um eine kastenartige Tragkonstruktion umlaufend angeordnet sind, an deren Unterseite die Haltebahn ausgebildet ist, wobei die Magneteinheiten und die Unterdrukkerzeuger im Inneren der Tragkonstruktion angeordnet sind.

Mit der Erfindung wird der zum Halten der Bauteile erforderliche Unterdruck stationär unmittelbar neben dem oder den Transportriemen erzeugt, und zwar mit Hilfe der vielen hintereinander angeordneten Ansaugdüsen, die auf die zu transportierenden Transportgüter ausgerichtet sind und diese gegen den bzw. die seitlich möglichst nahe neben den Ansaugdüsen laufenden Transportriemen ansaugen. Da der Abstand zwischen dem vorderen Düsenrand der Ansaugdüsen und der Transportseite der Transportriemen bzw. der angesaugten ebenen Fläche des transportierten Bauteils nur gering ist und beispielsweise im Idealfall nur wenige Zehntel Millimeter betragen kann, ist auch die Menge der durch diesen zwischen Düsenrand und Bauteil verbleibenden Spalt angesaugten Falschluft verschwindend gering, sobald die jeweilige Ansaugdüse vollständig von dem transportierten Bauteil überdeckt ist. Obwohl also die transportierten Bauteile mit den Ansaugdüsen nicht in direkten Kontakt kommen, werden sie von diesen sicher festgehalten und gegen die Transportriemen gezogen, mit deren Hilfe sie von einer Übernahmestation zu einer Abgabestelle transportiert werden.

Erfindungsgemäß werden mit einer Vielzahl von feststehenden Ansaugdüsen örtlich unveränderliche Unterdruckzonen an der Fördereinrichtung geschaffen werden, die ein Bauteil auf seinem Transportweg nacheinander durchläuft. Als Transportriemen können daher einfache Standardriemen eingesetztwerden, deren Transportseite eine einfache glatte Fläche bildet, ohne daß hieran zusätzliche Sauger, Unterdruckvertiefungen od.dgl. angeordnet sein müßten. Beispielsweise ist es möglich, für die Fördereinrichtung solche Riemen zu verwenden, wie sie bislang nur bei reinen Magnetbandförderern eingesetzt wurden.

Vorzugsweise sind die Ansaugdüsen zwischen zwei parallel entlang der Haltebahn bewegbaren Transportriemen angeordnet. Sie bilden dann zwischen den beiden Transportriemen einen zentralen Ansaugbereich für die Bleche od.dgl., die sich im angesaugten Zustand gleichmäßig an den beiden Transportriemen abstützen. Es ist ebenfalls möglich, daß die Unterdruckeinrichtung mindestens zwei Gruppen mit jeweils mehreren Ansaugdüsen aufweist, die beidseits des oder der Transportriemen neben den Riemenlängskanten hintereinander angeordnet sind. Bei dieser Ausführungsform befinden sich also Ansaugbereiche für die zu transportierenden Bauteile an beiden Längskanten des oder der Transportriemen.

Da nach der Erfindung jeder Ansaugdüse ein eigener Unterdrukkerzeuger zugeordnet ist, hat die Luft, die von einer Ansaugdüse angesaugt wird, in deren Ansaugbereich sich gerade kein Werkstück befindet, keinen Einfluß auf die wirksame Ansaugleistung der Ansaugdüsen, durch deren Ansaugbereich gerade ein Bauteil hindurchtransportiert wird. Die Unterdruckerzeuger für die einzelnen Ansaugdüsen können im wesentlichen aus Ventilatoren, Venturidüsen und/ oder sogenannten "Airmovern" bestehen, die auch als "Luftmengenverstärker" bezeichnet werden und die ähnlich wie Venturidüsen mit Hilfe von Druckluft an ihrem einen Ende große Mengen Umgebungsluft ansaugen können.

Da die Unterdruckerzeuger erfindungsgemäß weiterhin fürzumindest einen Teil der Ansaugdüsen einzeln und/oder gruppenweise schaltbar sind, ist es möglich, die Erzeugung des Unterdrucks an ausgewählten Ansaugdüsen gezielt zu unterbrechen und damit die transportierten Bauteile durch kurzzeitiges Abschalten des Unterdruckes exakt an einer gewünschten Stelle abzuwerfen.

Zweckmäßig sind die Unterdruckerzeuger in der Nähe des Düsenrands der Ansaugdüsen angeordnet, wodurch eine besonders kompakte Bauform erreicht werden kann und Verluste durch zu lange Ansaugleitungen vermieden werden. Die Ansaugdüsen können in gleichbleibendem, festen Abstand voneinander an der Haltebahn der Bandfördereinrichtung angeordnet sein. Besonders vorteilhaft ist es jedoch, wenn die Ansaugdüsen in ihrem Abstand voneinander verstellbar an der Haltebahn angeordnet sind und wenn insbesondere die Anzahl der.an der Haltebahn des Förderers vorgesehenen Ansaugdüsen variabel ist. Je nach Größe und Gewicht der zu transportierenden Bauteile können dann die Abstände der Ansaugdüsen und deren Anzahl optimal eingestellt werden, so daß für jedes zu transportierende Bauteil immer ausreichend viele Düsen gleichzeitig den Unterdruck an dessen Oberseite erzeugen und das Bauteil dadurch halten, jedoch auch nicht mehr Ansaugdüsen als erforderlich eingesetzt werden müssen. Natürlich ist ein entsprechender Effekt auch bei einer Anordnung der Ansaugdüsen im festen Abstand voneinander möglich, indem beispielsweise bei besonders leichten, zu transportierenden Bauteilen nur jede zweite oder gar jede dritte Düse wirksam ist und an der Oberseite des Transportgutes einen Sog erzeugt, während die restlichen Düsen nur beim Transport von schwereren Bauteilen wirksam sind.

Durch die erfindungsgemäße Zuordnung von an der Haltebahn wirkenden Magneteinheiten zu dem oder den Transportriemen kann die Bandfördereinrichtung als Kombinationsförderer mit Hilfe der Magneteinhelten ferromagnetische Bauteile transportieren, die von dem durch die Transportriemen hindurch wirkenden Magnetfelder gegen diese angezogen werden, während nichtferromagnetische Bauteile weiterhin mit Hilfe der Unterdruckeinrichtung gegen die Riemen angesaugt werden. Dabei ist zumindest ein Teil der Magneteinheiten einzeln oder gruppenweise schaltbar, wie dies an sich bekannt ist, um die ferromagnetischen Platinen od.dgl. an gewünschter Stelle abwerfen zu können.

Wenn der bzw. die Transportriemen mit Stahleinlagen bewehrtsind, haben sie nicht nur eine besonders lange Lebensdauer, sondern die Riemen selbst werden - sofern der Förderer mit den Magneteinheiten versehen ist - fest gegen die Unterseite des Förderers von den Magneten angezogen und liegen weitgehend luftdicht an dieser an, so daß auch in diesem Bereich die Unterdruckeinrichtung keine Falschluft ansaugen kann. Zweckmäßig sind der bzw. die Transportriemen mittels an ihren Längsseiten angreifenden Halteleisten gegen die Haltebahn angedrückt, um auch dann ein Durchhängen der Riemen sicher zu vermeiden, wenn diese nicht mit Stahleinlagen und/oder die Förderer nicht mit Magneteinheiten versehen sind.

Die Ansaugdüsen haben im Bereich ihres Düsenrands vorzugsweise einen etwa kreisförmigen oder elliptischen Querschnitt, können aber insbesondere bei Düsen, die unmittelbar aneinander angrenzend im Förderer angeordnet, sind auch rechteckig sein, so daß zwischen zwei benachbarten Düsen in Längsrichtung des Förderers praktisch kein Freiraum bleibt, in dessen Bereich kein Sog erzeugt werden kann.

Der oder die Transportriemen sind um eine kastenartige Tragkonstruktion umlaufend angeordnet, an deren Unterseite die Haltebahn ausgebildet ist, wobei die Magneteinheiten und/oder die Unterdruckerzeuger im Inneren der Tragkonstruktion angeordnet sind. Dadurch ergibt sich eine besonders kompakte und wartungsarme Bauweise.

Weitere Merkmale und Vorteile der Erfindung ergeben sich aus der nachfolgenden Beschreibung und derZeichnung, worin eine bevorzugte Ausführungsform der Erfindung an einem Beispiel näher erläutert wird. Es zeigt:
- Fig. 1: eine Unterdruck-Bandfördereinrichtung in einem stark schematisierten Längsschnitt; und
- Fig. 2: die Bandfördereinrichtung nach Fig. 1 in einem vergrößerten Querschnitt längs der Linie II-II.

Die in der Zeichnung stark vereinfacht dargestellte Bandfördereinrichtung weist eine kastenförmige Tragkonstruktion 10 auf, an deren vorderen und hinteren Ende Umlenkrollen 11 für zwei Transportriemen 12 angeordnet sind. Dabei ist die Anordnung so getroffen, daß die an der Oberseite der Tragkonstruktion verlaufenden Leertrume 13 der Transportriemen auf der flachen Oberfläche 14 des Tragkastens 10 verlaufen, während die Lasttrume 15 der Riemen 12 sich unten an der Tragkonstruktion 10 an eine dort vorgesehene Haltebahn 16 anlegen.

Um mit der Bandfördereinrichtung Transportgüter, insbesondere Bleche 17 oder andere platinenförmige Bauteile hängend transportieren zu können, ist die Fördereinrichtung mit einer in ihrer Gesamtheit als 18 bezeichneten Unterdruckeinrichtung versehen, mit deren Hilfe die zu transportierenden Bleche 17 gegen die beiden Transportriemen 12 angesaugt werden.

Die Unterdruckeinrichtung 18 besteht im wesentlichen aus einer Vielzahl von in Transportrichtung 19 hintereinander angeordneten Ansaugdüsen 20, die alle mit einem eigenen Unterdruckerzeuger 21 ausgestattet sind. Bei den lediglich schematisch dargestellten Unterdruckerzeugern kann es sich um Ventilatoren oder bevorzugt um Airmover und/oder Venturidüsen handeln, wie sie für den Einsatz in Unterdruck-Bandförderern als solche bereits bekannt sind.

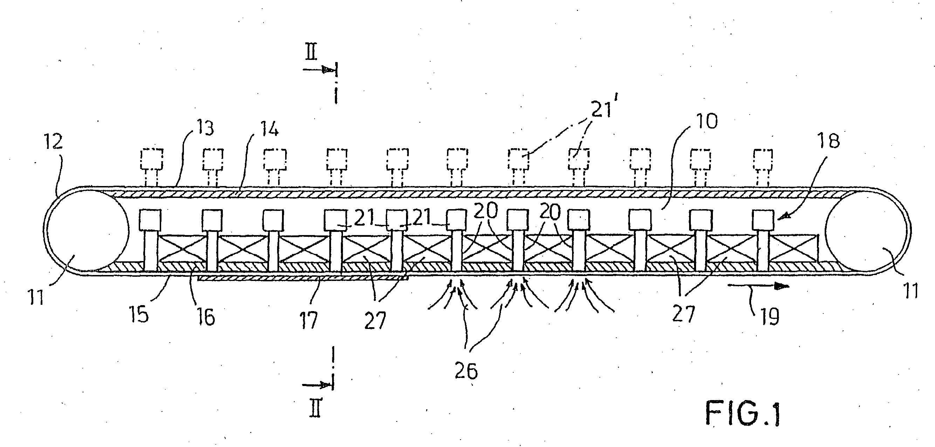

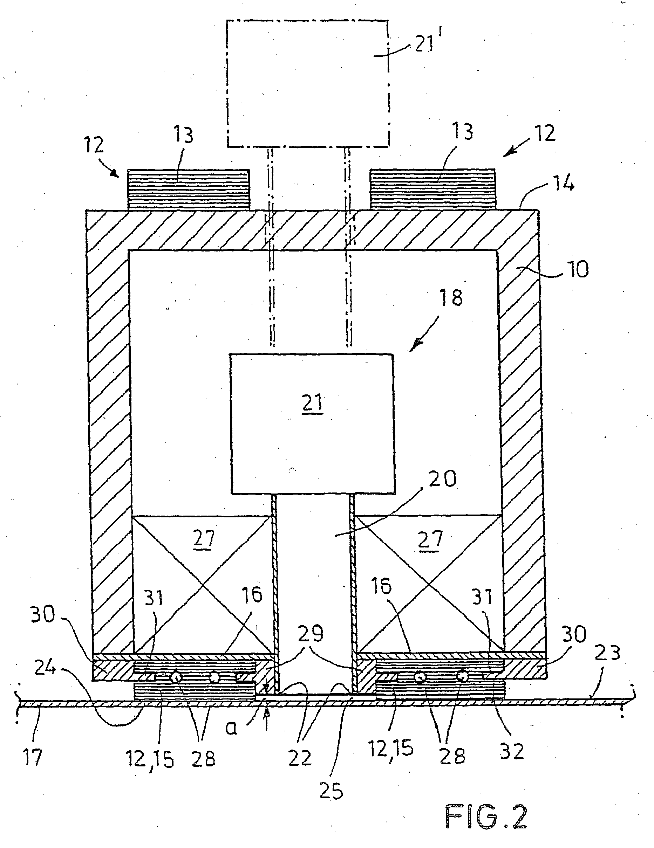

Wie sich insbesondere aus Fig. 2 ergibt, sind die Ansaugdüsen an der Haltebahn 16 unmittelbar seitlich neben den beiden Transportriemen 12 zwischen diesen angeordnet. Dabei ragen sie von der Haltebahn 16 soweit vor, daß ihr in Richtung auf die Bleche 17 weisender Düsenrand 22 sich in geringem Abstand a von der Blechoberseite 23 bzw. der Transportseite 24 der Transportriemen befindet. Zwischen dem Düsenrand 22 der Ansaugdüsen 20 und einem transportierten Blech 17 verbleibt also nur ein sehr schmaler Spalt 25, dessen Dicke meist unter einem Millimeter liegt und in Einzelfällen sogar nur wenige Zehntel Millimeter betragen kann. Aufgrund der geringen Spaltdicke a istdievon den Ansaugdüsen auf das zu transportierende Blech ausgeübte Sogwirkung der auf das Blech ausgerichteten Ansaugdüsen ausreichend, dieses entgegen der Wirkung der Schwerkraft zu haften und fest gegen die beiden seitlich neben den Ansaugdüsen entlanglaufenden Transportriemen zu ziehen. Wie aus Fig. 1 ersichtlich ist, sind beim Transport des Bleches immer mehrere Ansaugdüsen gleichzeitig beteiligt, das Blech gegen die Transportriemen anzusaugen, wobei jede Ansaugdüse ein ortsfestes "Sogfeld" oder eine Unterdruckzone 26 erzeugt und das transportierte Blech 17 auf seinem Transportweg nacheinander in die Wirkungsbereiche der einzelnen Sogfelder gelangt, die für den Andruck des Bleches gegen die Transportriemen sorgen.

Wie sich aus derZeichnung ergibt, sind die Unterdruckerzeuger 21 für die einzelnen Ansaugdüsen 20 vorzugsweise im Inneren der Tragkonstruktion 10 untergebracht, und zwar möglichst in der Nähe des Düsenrands 22 der Ansaugdüsen 20; die somit selbst nur eine geringe Länge haben. Selbstverständlich ist es aber auch möglich, die Unterdruckerzeuger 21 außerhalb der Tragkonstruktion anzuordnen, beispielsweise an deren Oberseite 14, wie dies durch die strichpunktierten Linien mit dem Bezugszeichen 21' angedeutet ist.

Wie sich insbesondere aus Fig. 2 ergibt, sind in der Tragkonstruktion seitlich neben den Ansaugdüsen 20 den beiden Transportriemen 12 zugeordnete Magneteinheiten 27 vorgesehen, die im wesentlichen aus an sich bekannten, schaltbaren Permanentmagneten bestehen, deren Magnetfeld die Transportriemen 12 durchdringt, so daß mit ihrer Hilfe ferromagnetische Werkstoffe in an sich bekannterWeise transportiert werden können. Die Transportriemen 12 selbst sind mitferromagnetischen Stahleinlagen 28 versehen und werden von den Magneteinheiten 27 so gegen die Haltebahn 16 dicht angezogen. Zusätzlich wird ein Durchhängen der Lasttrume 15 derTransportriemen nach unten noch durch Halteleisten 29, 30 verhindert, die an der Unterseite der Tragkonstruktion seitlich neben der Haltebahn 16 bzw. an der Außenseite der Ansaugdüsen 20 angebracht sind und mit stegartigen Vorsprüngen 31 in hieran angepaßte Nuten 32 in den Transportriemen eingreifen.

In an sich bekannter Weise ist zumindest ein Teil der über die Länge des Förderers hintereinander angeordneten Magneteinheiten 27 einzeln oder gruppenweise ein- bzw. abschaltbar, so daß dietransportierten, mit Hilfe der Magnete gehaltenen Bleche an der gewünschten Stelle abgeworfen werden können. In entsprechender Weise sind auch die Unterdruckerzeuger 21 der Ansaugdüsen zumindest im Bereich der Abwurfstelle schaltbar, so daß zum Abwurf eines mit Hilfe der Unterdruckeinrichtung gehaltenen Bleches die Sogerzeugung kurzfristig unterbrochen werden kann und das Blech dann infolge seiner Schwerkraft sich von den Transportriemen löst.

Die Erfindung ist nicht auf das dargestellte und beschriebene Ausführungsbeispiel beschränkt, sondern es sind viele Änderungen und Ergänzungen denkbar, ohne den Rahmen der Erfindung zu verlassen. Beispielsweise ist es denkbar, die Ansaugdüsen der Unterdruckeinrichtung in mehrere Gruppen so zu unterteilen, daß beidseits von jedem Transportriemen an deren Riemenlängskanten hintereinander so angeordnet sind, daß die Düsenränder der Ansaugdüsen bis nahe an das zu transportierende Werkstück heranreichen. Die Ansaugdüsen können an der Tragkonstruktion fest in gleichbleibendem Abstand angeordnet sein, wobei eine um so höhere Tragfähigkeit erreicht wird, je näher die Ansaugdüsen beieinander liegen. Besonders zweckmäßig kann es sein, die Ansaugdüsen an derTragkonstruktion verschieblich anzuordnen, um so ihren Abstand voneinander einstellen zu können. Die Anordnung kann dabei auch so getroffen sein, daß bei Bedarf zusätzliche Düsen nachträglich eingebaut oder überzählige Ansaugdüsen ausgebaut werden können, so daß immer nur die erforderliche, optimale Anzahl von Ansaugdüsen für die Beförderung eines Werkstückes in der Anlage vorgesehen ist. Entscheidend für die Erfindung ist die Tatsache, daß die transportierten Bleche od. dgl. nicht durch die Riemen hindurch gegen diese angesaugt werden, sondern daß die Sogwirkung seitlich neben den Riemen erfolgt, wodurch für die Fördereinrichtung einfache Standardriemen verwendet werden können, die keine besonderen Sauger oder Saugtaschen aufweisen müssen und die daher nicht nur besonders preiswert und haltbar sind, sondern auch problemlos zu reinigen und generell schmutzunempfindlich sind. Mit der Erfindung entfällt auch das Problem der Abdichtung zwischen der ortsfest am Förderer angeordneten Unterdruckeinrichtung und den umlaufenden Transportriemen, die bei einigen bekannten Unterdruckförderern erforderlich und regelmäßig problematisch gewesen ist.

## Patentansprüche

1. Bandfördereinrichtung für den hängenden Transport von Transportgütern mittels Unterdruck, insbesondere von platinenartigen Werkstücken, Blechen od.dgl., mit mindestens einem entlang einer Haltebahn bewegbaren Transportriemen und mit einer die Transportgüter gegen eine Transportseite des mindestens einen Transportriemens ansaugenden Unterdruckeinrichtung, die eine Vielzahl von in Transportrichtung (19) des Transportriemens (12) hintereinander angeordneten Ansaugdüsen (20) aufweist, wobei jeder Ansaugdüse ein eigener Unterdrukkerzeuger (21) zugeordnet ist, und mit dem oder den Transportriemen (12) zugeordneten, an der Haltebahn (16) wirkenden Magneteinheiten (27), **dadurch gekennzeichnet, daß** die Ansaugdüsen (20) seitlich neben dem mindestens einen Transportriemen (12) an der Haltebahn (16) so angeordnet sind, daß sich ihr in Richtung auf die transportierten Transportgüter (17) weisender Düsenrand (22) in geringem Abstand (a) zu diesen bzw. der Transportseite (24) des Transportriemens (12) befindet und daß die Unterdruckerzeuger (21) für zumindest einen Teil der Ansaugdüsen (20) einzeln und gruppenweise bzw. gruppenweise schaltbar sind, und daß zumindest ein Teil der Magneteinheiten einzeln oder gruppenweise schaltbar ist, und daß der oder die Transportriemen (12) um eine kastenartige Tragkonstruktion (10) umlaufend angeordnet ist/sind, an deren Unterseite die Haltebahn (16) ausgebildet ist, wobei die Magneteinheiten (27) und die Unterdruckerzeuger (21) im Inneren der Tragkonstruktion (10) angeordnet sind.

2. Bandfördereinrichtung nach Anspruch 1, **dadurch gekennzeichnet, daß** die Ansaugdüsen (20) zwischen zwei parallel entlang der Haltebahn (16) bewegbaren Transportriemen (12) angeordnet sind.

3. Bandfördereinrichtung nach Anspruch 1 oder 2, **dadurch gekennzeichnet, daß** die Unterdruckeinrichtung (18) mindestens zwei Gruppen mit jeweils mehreren Ansaugdüsen (20) aufweist, die beidseits des oder der Transportriemen (12) neben den Riemenlängskanten hintereinander angeordnet sind.

4. Bandfördereinrichtung nach einem der Ansprüche 1 bis 3, **dadurch gekennzeichnet, daß** die Unterdruckerzeuger (21) für die einzelnen Ansaugdüsen (20) im wesentlichen aus Ventilatoren, Venturidüsen und/oder Airmovern bestehen.

5. Bandfördereinrichtung nach einem der Ansprüche 1 bis 4, **dadurch gekennzeichnet, daß** die Unterdruckerzeuger (21) in der Nähe des Düsenrands (22) der Ansaugdüsen (20) angeordnet sind.

6. Bandfördereinrichtung nach einem der Ansprüche 1 bis 5, **dadurch gekennzeichnet, daß** die Ansaugdüsen (20) in gleichbleibendem, festen Abstand voneinander angeordnet sind.

7. Bandfördereinrichtung nach einem der Ansprüche 1 bis 6, **dadurch gekennzeichnet, daß** die Ansaugdüsen (20) in ihrem Abstand voneinander verstellbar an der Haltebahn (16) angeordnet sind.

8. Bandfördereinrichtung nach einem der Ansprüche 1 bis 7, **dadurch gekennzeichnet, daß** der bzw. die Transportriemen (12) mit Stahleinlagen (28) bewehrt sind.

9. Bandfördereinrichtung nach einem der Ansprüche 1 bis 8, **dadurch gekennzeichnet, daß** der bzw. die Transportriemen (12) mittels an ihren Längsseiten angreifenden Halteleisten (29, 30) gegen die Haltebahn (16) angedrückt sind.

10. Bandfördereinrichtung nach einem der Ansprüche 1 bis 9, **dadurch gekennzeichnet, daß** die Ansaugdüsen (20) im Bereich ihres Düsenrands (22) einen etwa kreisförmigen oder elliptischen Querschnitt haben.

## Claims

1. Belt conveyor device for the suspended transport of transport goods by means of vacuum, in particular of plate-like workpieces, metal sheets or the like, with at least one transport belt which can be moved along a holding track and with a vacuum device which draws the transport goods against a transport side of the at least one transport belt which comprises a plurality of suction nozzles (20) arranged successively in the transport direction (19) of the transport belt (12), whereby every suction nozzle (20) has its own vacuum generator (21) assigned thereto, and with magnetic units (27) assigned to the transport belt(s) (12), which units act on the holding track (16), **characterized in that** the suction nozzles (20) are arranged at the holding track (16) at the side next to the at least one transport belt (12) in such a manner that their nozzle edge (22) which points in the direction of the transported transport goods (17) has a small distance (a) to this or to the transport side (24) of the transport belt (12), and that the vacuum generators (21) can be switched individually and in groups or in groups for at least a part of the suction nozzles (20) and that at least a part of the magnetic units can be switched individually or in groups and that the transport belt(s) (12) is/are arranged circulating around a box-like support construction (10), at the underside thereof the holding track (16) being formed, whereby the magnetic units (27) and the vacuum generators (21) are arranged in the interior of the support construction (10).

2. Belt conveyor device according to claim 1, **characterized in that** the suction nozzles (20) are arranged between two transport belts (12) which can be moved in a parallel manner along the holding track (16).

3. Belt conveyor device according to claim 1 or 2, **characterized in that** the vacuum device (18) comprises at least two groups with respectively several suction nozzles (20) which are arranged on both sides of the transport belt(s) (12) next to the longitudinal edges of the belt one after the other.

4. Belt conveyor device according to one of claims 1 to 3, **characterized in that** the vacuum generators (21) for the individual suction nozzles (20) essentially consist of fans, venturi nozzles and/or air movers.

5. Belt conveyor device according to one of claims 1 to 4, **characterized in that** the vacuum generators (21) are arranged in the proximity of the nozzle edge (22) of the suction nozzles (20).

6. Belt conveyor device according to one of claims 1 to 5, **characterized in that** the suction nozzles (20) are arranged in an unvarying fixed distance from one another.

7. Belt conveyor device according to one of claims 1 to 6, **characterized in that** the suction nozzles (20) are arranged at the holding track (16) with their distance adjustable to one another.

8. Belt conveyor device according to one of claims 1 to 7, **characterized in that** the transport belt(s) (12) are armoured with steel inserts (28).

9. Belt conveyor device according to one of claims 1 to 8, **characterized in that** the or the transport belt(s) are pressed against the holding track (16) by means of holding ledges (29, 30) which engage their longitudinal sides.

10. Belt conveyor device according to one of claims 1 to 9, **characterized in that** the suction nozzles (20) have an approximately circular or elliptical cross section in the region of their nozzle edge (22).

## Revendications

1. Convoyeur à courroie pour le transport suspendu de produits à transporter au moyen d'une dépression, en particulier de pièces à usiner de type platine, de tôles ou similaires, comportant au moins une courroie de transport déplaçable le long d'une voie de support et comportant un dispositif à dépression aspirant les produits à transporter contre une face de transport de la ou des courroies de transport, lequel comporte un grand nombre de buses d'aspiration (20) disposées les unes derrière les autres dans la direction de transport (19) de la courroie de transport (12), à chaque buse d'aspiration étant associé son propre générateur de dépression (21), et comportant des unités magnétiques (27) associées à la ou aux courroies de transport (12) et agissant sur la voie de support (16), **caractérisé en ce que** les buses d'aspiration (20) sont disposés à côté de la ou des courroies de transport (12) sur la voie de support(16), de manière que leur bord de buse (22), dirigé vers les produits (17) transportés, se situe à faible distance (a) de ceux-ci ou de la face de transport (24) de la courroie de transport (12), et **en ce que** les générateurs de dépression (21) peuvent être commandés pour au moins une partie des buses d'aspiration (20) individuellement et par groupes ou par groupes, et **en ce qu'**au moins une partie des unités magnétiques peut être commandée individuellement ou par groupes, et **en ce que** la ou les courroies de transport (12) est/sont disposées de manière à circuler autour d'une construction portante (10) de type caisson, sur la face inférieure de laquelle est réalisée la voie de support (16), les unités magnétiques (27) et les générateurs de dépression (21) étant disposés à l'intérieur de la construction portante (10).

2. Convoyeur à courroie selon la revendication 1, **caractérisé en ce que** les buses d'aspiration (20) sont disposées entre deux courroies de transport (12) déplaçables parallèlement le long de la voie dc support (16).

3. Convoyeur à courroie selon la revendication 1 ou 2, **caractérisé en ce que** le dispositif à dépression (18) comporte au moins deux groupes avec chacun plusieurs buses d'aspiration (20) qui sont disposées les unes derrière les autres des deux côtés de la ou des courroies de transport (12), à côté des bords longitudinaux des courroies.

4. Convoyeur à courroie selon l'une des revendications 1 à 3, **caractérisé en ce que** les générateurs de dépression (21) pour les différentes buses d'aspiration (20) sont essentiellement constitués de ventilateurs, de buses de Venturi et/ou dc brasseurs d'air.

5. Convoyeur à courroie selon l'une des revendications 1 à 4, **caractérisé en ce que** les générateurs de dépression (21) sont disposés à proximité du bord (22) des buses d'aspiration (20).

6. Convoyeur à courroie selon l'une des revendications 1 à 5, **caractérisé en ce que** les buses d'aspiration (20) sont disposées à distance fixe et constante les unes des autres.

7. Convoyeur à courroie selon l'une des revendications 1 à 6, **caractérisé en ce que** les buses d'aspiration (20) sont disposées sur la voie de support (16) à distance réglable les unes des autres.

8. Convoyeur à courroie selon l'une des revendications 1 à 7, **caractérisé en ce que** la ou les courroies dc transport (12) sont armées de garnitures d'acier (28).

9. Convoyeur à courroie selon l'une des revendications 1 à 8, **caractérisé en ce que** la ou les courroies dc transport (12) sont pressées contre la voie-de support (16) au moyen de barres de maintien (29, 30) agissant sur leurs côtés longitudinaux.

10. Convoyeur à courroie selon l'une des revendications 1 à 9, **caractérisé en ce que** les buses d'aspiration (20) présentent, dans la zone de leur bord (22), une section transversale approximativement circulaire ou elliptique.
